# FASCICULE DE BREVET EUROPEEN

(11) **EP 3 648 971 B1**
(45) Date de publication et mention de la délivrance du brevet: **19.05.2021**
(21) Numéro de dépôt: 18765686.3
(22) Date de dépôt: 06.07.2018
(51) Int. Cl.: B32B 17/10, B64C 1/14, B64D 45/02

(54) **SUPPRESSION DU BRUIT DE DECHARGE ELECTROSTATIQUE PAR CONDUCTION ENTRE UN ELEMENT METALLIQUE EN GRADIN ET LE RESEAU ELECTRIQUE D'UN VITRAGE**
UNTERDRÜCKUNG DES ELEKTROSTATISCHEN ENTLADUNGSGERÄUSCHS DURCH LEITUNG ZWISCHEN EINEM GESTAFFELTEN METALLISCHEN ELEMENT UND DEM ELEKTRISCHEN SYSTEM EINER VERGLASUNG
ELECTROSTATIC DISCHARGE NOISE SUPPRESSION BY CONDUCTION BETWEEN A TIERED METALLIC ELEMENT AND THE ELECTRICAL SYSTEM OF A GLAZING

(30) Priorité: 06.07.2017 FR 1700719
(43) Date de publication de la demande: 13.05.2020
(73) Titulaire: SAINT-GOBAIN GLASS FRANCE, 92400 Courbevoie (FR); AIRBUS OPERATIONS (S.A.S.), 31060 Toulouse (FR)
(72) Inventeur: DEBRUS, Marie-Hélène, 45570 Dampierre en Burly (FR); TONDU, Thomas, 45600 Sully (FR); UNFER, Catherine, 31060 Toulouse (FR); FLOURENS, Franck, 31060 Toulouse (FR); DELVERDIER, Osmin, 31060 Toulouse (FR); CANALES, Hugo, 31060 Toulouse (FR)
(74) Mandataire: Saint-Gobain Recherche
(86) Numéro de dépôt international: PCT/FR2018/051696
(87) Numéro de publication internationale: WO 2019/008289

(56) Documents cités:
- EP-A2- 0 376 190
- FR-A1- 2 888 082
- US-A- 3 953 630
- US-A- 3 974 359
- US-A1- 2013 026 296
- DATABASE WPI Week 200101 13 octobre 2000 (2000-10-13) Thomson Scientific, London, GB; AN 2001-003055 XP002778085, -& JP 2000 286591 A (ASAHI GLASS CO LTD) 13 octobre 2000 (2000-10-13)

## Description

Les vitrages de cockpits aéronautiques sont des assemblages de verres minéraux et/ou organiques assemblés par feuilletage avec des couches adhésives intercalaires. La pénétration d'eau par diffusion à travers les couches adhésives intercalaires peut engendrer des défaillances du vitrage feuilleté, par exemple en favorisant le délaminage ou en dégradant les systèmes électriques intégrés au vitrage.

Une parade répandue à la pénétration d'humidité dans les couches adhésives intercalaires de feuilletage consiste en l'application périphérique d'un élément métallique conforme à une zone périphérique du vitrage feuilleté, notamment d'un élément métallique en gradin comme il sera vu par la suite, élément métallique communément appelé « Zed » du fait de la forme de cette ceinture.

Ce zed est collé aux feuilles de verre du vitrage feuilleté et peut être couvert par un joint d'étanchéité à l'air et à l'eau, tel qu'en silicone ou équivalent, ainsi que par une « goutte » (joint externe) procurant de bonnes propriétés de durabilité et d'aérodynamique. Ce joint externe est en polysulfure ou équivalent.

Le zed métallique se trouve donc au sein de silicone et polysulfure, électriquement isolé des éléments électriques internes du vitrage feuilleté et de sa structure de montage. Il est électriquement flottant, susceptible de porter des charges électrostatiques. Il peut se charger dans certaines conditions de vol à des potentiels sensiblement différents de ceux de la structure avion. Les modes de chargement du zed sont typiquement les vols en environnement chargeant : charge triboélectrique par impact de particules de l'environnement telles que neige, glace, poussières, pollution. Alors que la structure avion est équipée de systèmes de décharge, les éléments tels que les vitrages, isolés électriquement, accumulent les charges.

En particulier, les charges collectées par le vitrage peuvent être en partie drainées jusqu'au zed. Des potentiels permettant des décharges électrostatiques entre zed et structure avion (ou systèmes électriques intégrés au vitrage) peuvent être atteints.

Ceci peut se manifester par
- une signature sonore perturbant le pilote ;
- une signature lumineuse (flash, étincelles) perturbant le pilote ;
- une signature électromagnétique perturbant les équipements de l'avion.

Le document US 2013/026296 A1 décrit un vitrage feuilleté de cockpit d'avion, muni d'un film de protection électromagnétique destiné à empêcher le bruit électromagnétique. Le bord de ce vitrage feuilleté présente un contour continu en gradin et un élément en gradin en un matériau non conducteur.

Le document FR 2 888 082 A1 décrit des vitrages feuilletés chauffants pour cockpits d'avion. Le bord de ce vitrage feuilleté présente un contour continu en gradin et un élément métallique en gradin qui n'est relié à aucun autre élément électrique. Aucun de ces deux documents ne mentionne une sonde pour mesurer la température reliée à une alimentation électrique par un connecteur, ni aucune résistance électrique d'isolement.

L'invention a pour but de prévenir l'apparition des potentiels de décharge par une gestion de l'écoulement électrique vers des éléments électriques internes du vitrage.

Ce but est atteint par l'invention qui, en conséquence, a pour objet un vitrage feuilleté comprenant au moins une première feuille de verre constituant une face extérieure du vitrage, reliée à une seconde feuille de verre par une première couche adhésive intercalaire, dans lequel le bord de la première feuille de verre est en retrait par rapport à celui de la seconde, une partie périphérique de la surface libre de la première feuille de verre, le chant de cette dernière, le chant de la première couche adhésive intercalaire et une partie de la surface de la seconde feuille de verre débordant de la première feuille de verre décrivant un contour continu en gradin qui est recouvert par un élément métallique en gradin avec interposition d'un joint externe, l'élément métallique en gradin étant recouvert par un joint d'étanchéité à l'air et à l'eau, le vitrage feuilleté comprenant un réseau de fils et/ou une couche électroconductrice chauffant(e) muni(e) de bus bars, plusieurs sondes pour mesurer la température et autres éventuels éléments électriques reliés à une alimentation électrique par l'intermédiaire du connecteur du vitrage feuilleté, caractérisé en ce qu'un conducteur électrique relie l'élément métallique en gradin
- à un bus bar du réseau de fils et/ou de la couche électroconductrice chauffant(e) et /ou
- au capotage du connecteur du vitrage feuilleté, relié à la masse de la structure de montage du vitrage feuilleté, et/ou
- à un contact du connecteur reliant le réseau de fils et/ou la couche électroconductrice chauffant(e), une sonde ou tout autre éventuel élément électrique à la masse de la structure de montage du vitrage feuilleté , et/ou
- à un contact du connecteur reliant uniquement le conducteur électrique à la masse de la structure de montage du vitrage feuilleté, et/ou
- à un contact du connecteur avec une sonde ou tout autre éventuel élément électrique, mais non avec la masse de la structure de montage du vitrage feuilleté, et en ce qu'une résistance électrique d'isolement de 30 MΩ au plus est montée en série avec le conducteur électrique.

Comme déjà indiqué, l'élément métallique en gradin empêche la pénétration d'humidité dans les couches adhésives intercalaires de feuilletage. Il peut être en aluminium, inox ou autre métal, peut être indifféremment appelé « zed » dans la suite.

Le connecteur du vitrage feuilleté est par exemple un connecteur mâle destiné à être relié au connecteur femelle de la structure de montage du vitrage, notamment la structure d'un avion.

Le conducteur électrique est un fil notamment multibrin en cuivre, aluminium ou autre.

Le réseau de fils et/ou la couche électroconductrice chauffant(e) muni(e) de bus bars, les sondes et autres éventuels éléments électriques peuvent être reliés à la masse ou non.

Une résistance électrique d'isolement de 30 MΩ au plus est montée en série avec le conducteur électrique.

Cette mesure vise à
- assurer la protection des personnes, le zed ne devant pas être au potentiel réseau ;
- éviter les surchauffes locales en cas de fuite localisée de courant du réseau électrique vers une masse ;
- éviter la propagation de foudre par un circuit électrique interne à l'avion en cas d'attachement de la foudre sur le zed ;
- éviter les perturbations électriques sur les systèmes de régulation notamment par injection de courant sur ce système.

La résistance électrique d'isolement peut être intégrée au vitrage feuilleté, éventuellement au connecteur du vitrage feuilleté, ou sur le chant du vitrage feuilleté, dans le joint d'étanchéité qui sera décrit ci-après. Quand elle relie un élément électriquement lié à une masse, elle peut être nulle ; dans le cas contraire, elle est au moins égale à 1MΩ pour des raisons de risque électrique ou de prévention des fuites électriques.

Selon d'autres caractéristiques préférées du vitrage feuilleté de l'invention :
- il comprend au moins une troisième feuille de verre reliée à la seconde feuille de verre par une seconde couche adhésive intercalaire ;
- le réseau de fils et/ou la couche électroconductrice chauffant(e) muni(e) de bus bars est à l'interface entre la première feuille de verre et la première couche adhésive intercalaire ; ce positionnement est le plus proche de la surface extérieure du vitrage permettant la protection des fils / de la couche chauffants au sein de la structure feuilletée, et permet en conséquence de limiter au maximum la puissance de chauffage nécessaire pour éliminer le givre formé sur la surface extérieure du vitrage; dans ce cas, les sondes sont dans la première couche adhésive intercalaire ; cette disposition s'applique sur les vitrages frontaux (parebrise) de cockpit d'avion ;
- selon une alternative, le réseau de fils et/ou la couche électroconductrice chauffant(e) muni(e) de bus bars est à l'interface entre la seconde feuille de verre et la première couche adhésive intercalaire ou entre la seconde feuille de verre et la seconde couche adhésive intercalaire, auquel cas les sondes sont dans la seconde couche adhésive intercalaire ; cette disposition vise à éliminer la buée susceptible de se former sur la surface intérieure du vitrage ; elle s'applique aux vitrages latéraux de cockpit d'avion, dont la surface extérieure ne reçoit pas en général de goutte d'eau susceptible de cristalliser en givre;
- une partie du joint externe est rabattue au-dessus de l'élément métallique en gradin de manière à procurer au vitrage feuilleté de bonnes propriétés de durabilité et d'aérodynamique ; le joint externe est en polysulfure ou équivalent ;
- le joint d'étanchéité à l'air et à l'eau est en silicone ou équivalent
- la première feuille de verre est en verre minéral d'épaisseur comprise entre 0,5 et 5, de préférence entre 2 et 4 mm, ou en matériau polymère tel que poly(méthacrylate de méthyle) (PMMA) d'épaisseur comprise entre 0,5 et 5 mm ;
- la seconde feuille de verre, et le cas échéant la troisième feuille de verre, voire les suivantes sont en verre minéral d'épaisseur comprise entre 5 et 10 mm, ou en matériau polymère tel que poly(méthacrylate de méthyle) (PMMA) d'épaisseur comprise entre 5 et 30, de préférence au plus 20 mm ; ces feuilles de verre sont appelés « plis structuraux » ;
- les couches adhésives intercalaires sont en polyuréthane (PU), polyvinylbutyral (PVB), éthylène - acétate de vinyle (EVA) ou équivalent, l'épaisseur de la première couche adhésive intercalaire est comprise entre 3 et 10, de préférence 4 et 8 mm, et l'épaisseur de la seconde couche adhésive intercalaire et le cas échéant des suivantes est comprise entre 0,5 et 4, de préférence au plus égale à 2 mm.

Un autre objet de l'invention consiste en un procédé de fabrication d'un vitrage feuilleté tel que décrit précédemment, caractérisé en ce que
- le raccordement électrique du conducteur électrique à l'élément métallique en gradin est brasé, collé ou pincé ; et/ou
- le raccordement électrique du conducteur électrique au bus bar est collé, brasé, serti ou pincé ; et/ou
- le raccordement électrique du conducteur électrique aux contacts du connecteur est brasé ou serti ; et/ou
- le raccordement électrique du conducteur électrique au capotage du connecteur est brasé ou vissé.

Un autre objet de l'invention consiste en l'application d'un vitrage feuilleté décrit ci-dessus comme vitrage de bâtiment, de véhicule terrestre, aérien ou aquatique, ou pour le mobilier urbain, en particulier comme vitrage de cockpit de véhicule aérien. Les cockpits d'avions peuvent comporter deux vitrages frontaux et deux à quatre latéraux.

L'invention sera mieux comprise à la lumière de la description qui suit des dessins annexés dans lesquels
- la Figure 1 est une représentation schématique d'un vitrage feuilleté dans lequel le zed est relié électriquement à un contact du connecteur du vitrage feuilleté ;
- la Figure 2 est une représentation schématique d'un vitrage feuilleté dans lequel le zed est relié électriquement à un bus bar du réseau de fils et/ou de la couche électroconductrice chauffant(e).

Dans cet exemple, une feuille de verre désigne une feuille de verre aluminosilicate trempée chimique, commercialisée par la Société Saint-Gobain Sully sous la marque enregistrée Solidion®.

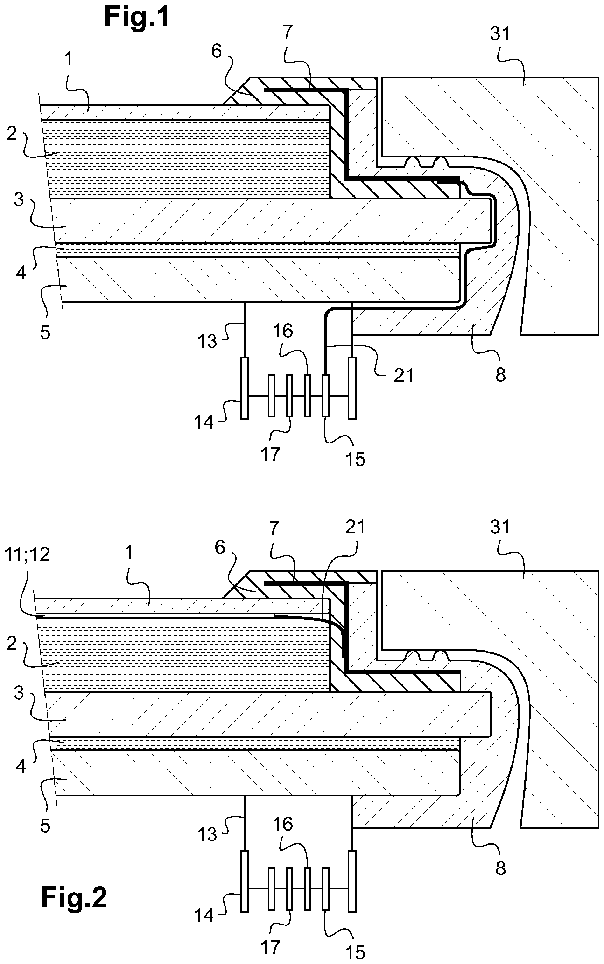

En référence aux Figures 1 et 2, un vitrage feuilleté comprend une première feuille de verre 1 constituant une face extérieure du vitrage, de 3 mm d'épaisseur, collée à une seconde feuille de verre 3 de 8 mm d'épaisseur par une première couche adhésive intercalaire 2 de polyvinylbutyral (PVB) de 5,3 mm d'épaisseur.

Une troisième feuille de verre 5 de 8 mm d'épaisseur est collée à la seconde 3 par une seconde couche adhésive intercalaire 4 de polyvinylbutyral (PVB) de 2 mm d'épaisseur.

Le bord de la première feuille de verre 1 est en retrait par rapport à celui de la seconde 3, une partie périphérique de la surface libre de la première feuille de verre 1, le chant de cette dernière 1, le chant de la première couche adhésive intercalaire 2 et une partie de la surface de la seconde feuille de verre 3 débordant de la première feuille de verre 1 décrivant un contour continu en gradin qui est recouvert par un élément métallique en gradin 7 en aluminium.

Ledit contour continu en gradin est recouvert par l'élément métallique en gradin 7 avec interposition d'un joint externe 6 en polysulfure, dont une partie est rabattue au-dessus de l'élément métallique en gradin 7 de manière à procurer au vitrage feuilleté de bonnes propriétés de durabilité et d'aérodynamique.

L'élément métallique en gradin 7 est recouvert par un joint 8 d'étanchéité à l'air et à l'eau, en silicone.

En référence à la Figure 2, un réseau de fils et/ou une couche électroconductrice chauffant(e) 11 muni(e) de bus bars 12 est à l'interface entre la première feuille de verre 1 et la première couche adhésive intercalaire 2.

Des sondes de mesure de la température, non représentées, sont dans la première couche adhésive intercalaire 2.

Le réseau de fils et/ou la couche électroconductrice chauffant(e) 11 muni(e) de bus bars 12, les sondes pour mesurer la température et autres éventuels éléments électriques sont reliés à une alimentation électrique par l'intermédiaire du connecteur 13 du vitrage feuilleté.

Un conducteur électrique 21 en cuivre multibrin American Wire Gauge 24 (AWG 24) relie l'élément métallique en gradin 7
- à un bus bar 12 du réseau de fils et/ou de la couche électroconductrice chauffant(e) 11 (Figure 2) et /ou
- au capotage 14 du connecteur 13 du vitrage feuilleté, relié à la masse de la structure de montage du vitrage feuilleté, et/ou
- à un contact 15 du connecteur 13 reliant le réseau de fils et/ou la couche électroconductrice chauffant(e) 11, une sonde ou tout autre éventuel élément électrique à la masse de la structure de montage du vitrage feuilleté (Figure 1), et/ou
- à un contact 16 du connecteur 13 reliant uniquement le conducteur électrique 21 à la masse de la structure de montage du vitrage feuilleté, et/ou
- à un contact 17 du connecteur 13 avec une sonde ou tout autre éventuel élément électrique, mais non avec la masse de la structure de montage du vitrage feuilleté.

Le vitrage feuilleté représenté sur les Figures 1 et 2 peut être installé par l'extérieur d'une structure de montage du vitrage feuilleté, par boulonnage d'un presse glace 31 recouvrant le vitrage feuilleté sur la structure de montage ; ce boulonnage peut produire un pincement du vitrage feuilleté ou pas, le vitrage feuilleté pouvant être aussi collé au presse glace 31, et dans tous les cas maintenu durablement solidaire de la structure de montage. Le presse glace 31 est un encadrement rapporté par l'extérieur.

Un montage par l'intérieur est aussi possible. Dans ce cas, la forme du presse glace mentionné précédemment est existante mais fait partie intégrante de la structure de montage, et on vient rapporter un encadrement (presse glace) depuis l'intérieur. Boulonnage du presse glace et collage du vitrage feuilleté peuvent être associés, avec ou sans pincement du vitrage feuilleté.

Aucune décharge intempestive du zed, aucun bruit perturbant signalant cette décharge, ne sont observés sur les vitrages conformes à l'invention.

## Revendications

1. Vitrage feuilleté comprenant au moins une première feuille de verre (1) constituant une face extérieure du vitrage, reliée à une seconde feuille de verre (3) par une première couche adhésive intercalaire (2), dans lequel le bord de la première feuille de verre (1) est en retrait par rapport à celui de la seconde (3), une partie périphérique de la surface libre de la première feuille de verre (1), le chant de cette dernière (1), le chant de la première couche adhésive intercalaire (2) et une partie de la surface de la seconde feuille de verre (3) débordant de la première feuille de verre (1) décrivant un contour continu en gradin qui est recouvert par un élément métallique en gradin (7) avec interposition d'un joint externe (6), l'élément métallique en gradin (7) étant recouvert par un joint (8) d'étanchéité à l'air et à l'eau, le vitrage feuilleté comprenant un réseau de fils et/ou une couche électroconductrice chauffant(e) (11) muni(e) de bus bars (12), plusieurs sondes pour mesurer la température et autres éventuels éléments électriques reliés à une alimentation électrique par l'intermédiaire du connecteur (13) du vitrage feuilleté, **caractérisé en ce qu'**un conducteur électrique (21) relie l'élément métallique en gradin (7)
- à un bus bar (12) du réseau de fils et/ou de la couche électroconductrice chauffant(e) (11) et /ou
- au capotage (14) du connecteur (13) du vitrage feuilleté, relié à la masse de la structure de montage du vitrage feuilleté, et/ou
- à un contact (15) du connecteur (13) reliant le réseau de fils et/ou la couche électroconductrice chauffant(e) (11), une sonde ou tout autre éventuel élément électrique à la masse de la structure de montage du vitrage feuilleté , et/ou
- à un contact (16) du connecteur (13) reliant uniquement le conducteur électrique (21) à la masse de la structure de montage du vitrage feuilleté, et/ou
- à un contact (17) du connecteur (13) avec une sonde ou tout autre éventuel élément électrique, mais non avec la masse de la structure de montage du vitrage feuilleté, et
**en ce qu'**une résistance électrique d'isolement de 30 MΩ au plus est montée en série avec le conducteur électrique (21).

2. Vitrage feuilleté selon la revendication 1, **caractérisé en ce qu'**il comprend au moins une troisième feuille de verre (5) reliée à la seconde feuille de verre (3) par une seconde couche adhésive intercalaire (4).

3. Vitrage feuilleté selon l'une des revendications précédentes, **caractérisé en ce que** le réseau de fils et/ou la couche électroconductrice chauffant(e) (11) muni(e) de bus bars (12) est à l'interface entre la première feuille de verre (1) et la première couche adhésive intercalaire (2).

4. Vitrage feuilleté selon la revendication 3, **caractérisé en ce que** les sondes sont dans la première couche adhésive intercalaire (2).

5. Vitrage feuilleté selon l'une des revendications 1 ou 2, **caractérisé en ce que** le réseau de fils et/ou la couche électroconductrice chauffant(e) (11) muni(e) de bus bars (12) est à l'interface entre la seconde feuille de verre (3) et la première couche adhésive intercalaire (2) ou entre la seconde feuille de verre (3) et la seconde couche adhésive intercalaire (4).

6. Vitrage feuilleté selon la revendication 5, **caractérisé en ce que** les sondes sont dans la seconde couche adhésive intercalaire (4).

7. Vitrage feuilleté selon l'une des revendications précédentes, **caractérisé en ce qu'**une partie du joint externe (6) est rabattue au-dessus de l'élément métallique en gradin (7) de manière à procurer au vitrage feuilleté de bonnes propriétés de durabilité et d'aérodynamique.

8. Vitrage feuilleté selon l'une des revendications précédentes, **caractérisé en ce que** la première feuille de verre (1) est en verre minéral d'épaisseur comprise entre 0,5 et 5, de préférence entre 2 et 4 mm, ou en matériau polymère tel que poly(méthacrylate de méthyle) (PMMA) d'épaisseur comprise entre 0,5 et 5 mm.

9. Vitrage feuilleté selon l'une des revendications précédentes, **caractérisé en ce que** la seconde feuille de verre (3), et le cas échéant la troisième feuille de verre (5), voire les suivantes sont en verre minéral d'épaisseur comprise entre 5 et 10 mm, ou en matériau polymère tel que poly(méthacrylate de méthyle) (PMMA) d'épaisseur comprise entre 5 et 30, de préférence au plus 20 mm.

10. Vitrage feuilleté selon l'une des revendications précédentes, **caractérisé en ce que** les couches adhésives intercalaires (2 ; 4) sont en polyuréthane (PU), polyvinylbutyral (PVB), éthylène - acétate de vinyle (EVA) ou équivalent, **en ce que** l'épaisseur de la première couche adhésive intercalaire (2) est comprise entre 3 et 10, de préférence 4 et 8 mm, et **en ce que** l'épaisseur de la seconde couche adhésive intercalaire (4) et le cas échéant des suivantes est comprise entre 0,5 et 4, de préférence au plus égale à 2 mm.

11. Procédé de fabrication d'un vitrage feuilleté selon l'une des revendications précédentes, **caractérisé en ce que**
- le raccordement électrique du conducteur électrique (21) à l'élément métallique en gradin (7) est brasé, collé ou pincé ; et/ou
- le raccordement électrique du conducteur électrique (21) au bus bar (12) est collé, brasé, serti ou pincé ; et/ou
- le raccordement électrique du conducteur électrique (21) aux contacts (15 ; 16 ; 17) du connecteur (13) est brasé ou serti ; et/ou
- le raccordement électrique du conducteur électrique (21) au capotage (14) du connecteur (13) est brasé ou vissé.

12. Application d'un vitrage feuilleté selon l'une des revendications 1 à 10 comme vitrage de bâtiment, de véhicule terrestre, aérien ou aquatique, ou pour le mobilier urbain.

13. Application selon la revendication 12 comme vitrage de cockpit de véhicule aérien.

## Patentansprüche

1. Verbundverglasung, umfassend mindestens eine erste Glasscheibe (1), die eine Außenfläche der Verglasung bildet, die mit einer zweiten Glasscheibe (3) durch eine erste Klebstoffzwischenschicht (2) verbunden ist, in der der Rand der ersten Glasscheibe (1) in Bezug auf den der zweiten (3) zurückgesetzt ist, wobei ein peripherer Teil der freien Oberfläche der ersten Glasscheibe (1), die Kante der letzteren (1), die Kante der ersten Klebstoffzwischenschicht (2) und ein Teil der Oberfläche der zweiten Glasscheibe (3), der von der ersten Glasscheibe (1) hervorsteht, eine gestaffelte durchgehende Kontur beschreiben, die von einem gestaffelten metallischen Element (7) unter Zwischenfügung einer Außendichtung (6) bedeckt ist, wobei das gestaffelte metallische Element (7) von einer Abdichtung (8) gegen Luft und Wasser bedeckt ist, wobei die Verbundverglasung umfasst:
ein Heizdrahtnetz und/oder eine elektrisch leitfähige Heizschicht (11), das (die) mit Stromsammelschienen (12) versehen ist (sind), mehrere Sonden zum Messen der Temperatur und andere mögliche elektrische Elemente, die über den Verbinder (13) der Verbundverglasung mit einer elektrischen Stromversorgung verbunden sind, **dadurch gekennzeichnet, dass** ein elektrischer Leiter (21) das gestaffelte metallische Element (7) verbindet
- mit einer Stromsammelschiene (12) des Heizdrahtnetzes und/oder der elektrisch leitfähigen Heizschicht (11) und/oder
- mit der Verkleidung (14) des Verbinders (13) der Verbundverglasung, die mit der Masse der Montagestruktur der Verbundverglasung verbunden ist, und/oder
- mit einem Kontakt (15) des Verbinders (13), der das Heizdrahtnetz und/oder die elektrisch leitfähige Heizschicht (11), eine Sonde oder jedes andere mögliche elektrische Element mit der Masse der Montagestruktur der Verbundverglasung verbindet, und/oder
- mit einem Kontakt (16) des Verbinders (13), der nur den elektrischen Leiter (21) mit der Masse der Montagestruktur der Verbundverglasung verbindet, und/oder
- mit einem Kontakt (17) des Verbinders (13) mit einer Sonde oder jedem anderen möglichen elektrischen Element, aber nicht mit der Masse der Montagestruktur der Verbundverglasung, und
**dadurch, dass** ein elektrischer Isolationswiderstand von höchstens 30 MΩ mit dem elektrischen Leiter (21) in Reihe geschaltet ist.

2. Verbundverglasung nach Anspruch 1, **dadurch gekennzeichnet, dass** sie mindestens eine dritte Glasscheibe (5) umfasst, die mit der zweiten Glasscheibe (3) durch eine zweite Klebstoffzwischenschicht (4) verbunden ist.

3. Verbundverglasung nach einem der vorstehenden Ansprüche, **dadurch gekennzeichnet, dass** sich das Heizdrahtnetz und/oder die elektrisch leitfähige Heizschicht (11), das (die) mit Stromsammelschienen (12) versehen ist (sind), an der Schnittstelle zwischen der ersten Glasscheibe (1) und der ersten Klebstoffzwischenschicht (2) befindet (befinden).

4. Verbundverglasung nach Anspruch 3, **dadurch gekennzeichnet, dass** sich die Sonden in der ersten Klebstoffzwischenschicht (2) befinden.

5. Verbundverglasung nach einem der Ansprüche 1 oder 2, **dadurch gekennzeichnet, dass** sich das Heizdrahtnetz und/oder die elektrisch leitfähige Heizschicht (11), das (die) mit Stromsammelschienen (12) versehen ist (sind), an der Schnittstelle zwischen der zweiten Glasscheibe (3) und der ersten Klebstoffzwischenschicht (2) oder zwischen der zweiten Glasscheibe (3) und der zweiten Klebstoffzwischenschicht (4) befindet (befinden).

6. Verbundverglasung nach Anspruch 5, **dadurch gekennzeichnet, dass** sich die Sonden in der zweiten Klebstoffzwischenschicht (4) befinden.

7. Verbundverglasung nach einem der vorstehenden Ansprüche, **dadurch gekennzeichnet, dass** ein Teil der Außendichtung (6) über das gestaffelte metallische Element (7) geklappt ist, um der Verbundverglasung gute Haltbarkeits- und Aerodynamikeigenschaften zu verleihen.

8. Verbundverglasung nach einem der vorstehenden Ansprüche, **dadurch gekennzeichnet, dass** die erste Glasscheibe (1) aus Mineralglas mit einer Dicke zwischen 0,5 und 5, vorzugsweise zwischen 2 und 4 mm, oder aus einem Polymermaterial wie Poly(methylmethacrylat) (PMMA) mit einer Dicke zwischen 0,5 und 5 mm besteht.

9. Verbundverglasung nach einem der vorstehenden Ansprüche, **dadurch gekennzeichnet, dass** die zweite Glasscheibe (3) und gegebenenfalls die dritte Glasscheibe (5), sogar die noch folgenden, aus Mineralglas mit einer Dicke zwischen 5 und 10 mm oder aus einem Polymermaterial wie Poly(methylmethacrylat) (PMMA) mit einer Dicke zwischen 5 und 30, vorzugsweise höchstens 20 mm, bestehen.

10. Verbundverglasung nach einem der vorstehenden Ansprüche, **dadurch gekennzeichnet, dass** die Klebstoffzwischenschichten (2; 4) aus Polyurethan (PU), Polyvinylbutyral (PVB), Ethylen-Vinylacetat (EVA) oder dergleichen bestehen, **dass** die Dicke der ersten Klebstoffzwischenschicht (2) zwischen 3 und 10, vorzugsweise 4 und 8 mm beträgt, und **dass** die Dicke der zweiten Klebstoffzwischenschicht (4) und gegebenenfalls der folgenden zwischen 0,5 und 4, vorzugsweise höchstens gleich 2 mm beträgt.

11. Verfahren zur Herstellung einer Verbundverglasung nach einem der vorstehenden Ansprüche, **dadurch gekennzeichnet, dass**
- der elektrische Anschluss des elektrischen Leiters (21) an das gestaffelte metallische Element (7) gelötet, geklebt oder geklemmt ist; und/oder
- der elektrische Anschluss des elektrischen Leiters (21) an die Stromsammelschiene (12) geklebt, gelötet, gecrimpt oder geklemmt ist; und/oder
- der elektrische Anschluss des elektrischen Leiters (21) an die Kontakte (15; 16; 17) des Verbinders (13) gelötet oder gecrimpt ist; und/oder
- der elektrische Anschluss des elektrischen Leiters (21) an die Verkleidung (14) des Verbinders (13) gelötet oder geschraubt ist.

12. Verwendung von einer Verbundverglasung nach einem der Ansprüche 1 bis 10 als Verglasung für Gebäude, Land-, Luft- oder Wasserfahrzeuge oder für Stadtmobiliar.

13. Verwendung nach Anspruch 12 als Cockpitverglasung für ein Luftfahrzeug.

## Claims

1. A laminated glazing comprising at least a first glass sheet (1) forming an exterior face of the glazing, which first sheet is linked to a second glass sheet (3) by a first interlayer adhesive layer (2), wherein the edge of the first glass sheet (1) is set back with respect to that of the second (3), a peripheral portion of the free surface of the first glass sheet (1), the edge of this glass sheet (1), the edge of the first interlayer adhesive layer (2) and a portion of the surface of the second glass sheet (3) extending beyond the first glass sheet (1) describing a continuous stepped contour which is covered by a stepped metal element (7), with the interposition of an external seal (6), the stepped metal element (7) being covered by an air- and watertight seal (8) the laminated glazing comprising
a heating network of wires and/or a heating electrically conductive layer (11) that is provided with busbars (12), several probes for measuring temperature and other optional electrical elements linked to an electrical power supply via the connector (13) of the laminated glazing, **characterized in that** an electrical conductor (21) links the stepped metal element (7)
- to a busbar (12) of the heating network of wires and/or of the heating electrically conductive layer (11); and/or
- to the cap (14) of the connector (13) of the laminated glazing, which is linked to the ground of the structure for mounting the laminated glazing; and/or
- to a contact (15) of the connector (13) linking the heating network of wires and/or the heating electrically conductive layer (11), a probe or any other optional electrical element to the ground of the structure for mounting the laminated glazing; and/or
- to a contact (16) of the connector (13) linking only the electrical conductor (21) to the ground of the structure for mounting the laminated glazing; and/or
- to a contact (17) of the connector (13) with a probe or any other optional electrical element, but not with the ground of the structure for mounting the laminated glazing; and
**in that** an electrically insulating resistor of at most 30 MΩ is connected in series with the electrical conductor (21).

2. The laminated glazing according to claim 1, **characterized in that** it comprises at least a third glass sheet (5) that is linked to the second glass sheet (3) by a second interlayer adhesive layer (4).

3. The laminated glazing according to one of the preceding claims, **characterized in that** the heating network of wires and/or the heating electrically conductive layer (11) provided with busbars (12) is at the interface between the first glass sheet (1) and the first interlayer adhesive layer (2).

4. The laminated glazing according to claim 3, **characterized in that** the probes are in the first interlayer adhesive layer (2).

5. The laminated glazing according to one of claims 1 or 2, **characterized in that** the heating network of wires and/or the heating electrically conductive layer (11) provided with busbars (12) is at the interface between the second glass sheet (3) and the first interlayer adhesive layer (2) or between the second glass sheet (3) and the second interlayer adhesive layer (4).

6. The laminated glazing according to claim 5, **characterized in that** the probes are in the second interlayer adhesive layer (4).

7. The laminated glazing according to one of the preceding claims, **characterized in that** a portion of the external seal (6) is folded over the stepped metal element (7) so as to afford the laminated glazing good durability and aerodynamic properties.

8. The laminated glazing according to one of the preceding claims, **characterized in that** the first glass sheet (1) is made of a mineral glass with a thickness of between 0.5 and 5, preferably between 2 and 4 mm, or made of a polymer material such as poly(methyl methacrylate) (PMMA) with a thickness of between 0.5 and 5 mm.

9. The laminated glazing according to one of the preceding claims, **characterized in that** the second glass sheet (3) and, if applicable, the third glass sheet (5) and so on are made of a mineral glass with a thickness of between 5 and 10 mm, or made of a polymer material such as poly(methyl methacrylate) (PMMA) with a thickness of between 5 and 30, preferably at most 20 mm.

10. The laminated glazing according to one of the preceding claims, **characterized in that** the interlayer adhesive layers (2; 4) are made of polyurethane (PU), polyvinyl butyral (PVB), ethylene/vinyl acetate (EVA) or equivalent, **in that** the thickness of the first interlayer adhesive layer (2) is between 3 and 10, preferably 4 and 8 mm, and **in that** the thickness of the second interlayer adhesive layer (4) and, if applicable, of the following layers is between 0.5 and 4, preferably at most equal to 2 mm.

11. A method for manufacturing a laminated glazing according to one of the preceding claims, **characterized in that**
- the electrical connection of the electrical conductor (21) to the stepped metal element (7) is brazed, glued or pinched; and/or
- the electrical connection of the electrical conductor (21) to the busbar (12) is glued, brazed, crimped or pinched; and/or
- the electrical connection of the electrical conductor (21) to the contacts (15; 16; 17) of the connector (13) is brazed or crimped; and/or
- the electrical connection of the electrical conductor (21) to the cap (14) of the connector (13) is brazed or screwed.

12. The use of a laminated glazing according to one of claims 1 to 10 as building glazing, ground, air or water vehicle glazing, or glazing for street furniture.

13. The use according to claim 12 as aircraft cockpit glazing.
